# EUROPÄISCHE PATENTANMELDUNG

(11) **EP 2 392 864 A2**
(43) Veröffentlichungstag der Anmeldung: **07.12.2011**
(21) Anmeldenummer: 11164745.9
(22) Anmeldetag: 04.05.2011
(51) Int. Cl.: F24D 3/10

(54) **Anordnung zur Versorgung eines Gebäudes mit Wärme**

(30) Priorität: 04.05.2010 DE 102010019413
(71) Anmelder: Solvis GmbH & Co. KG, 38112 Braunschweig (DE)
(72) Erfinder: Kraus, Bastian, 38154 Königslutter (DE); Wendker, Kai, 38106 Braunschweig (DE)
(74) Vertreter: Einsel, Martin

(57) **Zusammenfassung**

Eine Anordnung mit mindestens einer Quelle für Heizenergie (10, 11, 12) und mindestens einer Quelle für Kälteenergie (13, 14) weist Fluide führende Leitungen zur Versorgung von Räumen eines Gebäudes (15) mit Wärme und Fluide führende Leitungen zur Versorgung der Räume des Gebäudes (15) mit Kälte auf. Eine Umschalteinrichtung (20) ist vorgesehen. Die Umschalteinrichtung (20) ist mit der oder den Quellen für Heizenergie (10, 11, 12) und mit der oder den Quellen für Kältenergie (13, 14) über Fluide führende Leitungen und außerdem mit den Leitungen zur Versorgung der Räume des Gebäudes (15) verbunden. Die Umschalteinrichtung (20) ist so aufgebaut, dass sie die Wärme und die Kälte mittels der Fluide aus den Leitungen von den Quellen für Heizenergie (10, 12) und den Quellen für Kälteenergie (13, 14) steuerbar in die Leitungen zur Versorgung der Räume des Gebäudes (15) einspeist.

## Beschreibung

Die Erfindung betrifft eine Anordnung mit mindestens einer Quelle für Heizenergie und mindestens einer Quelle für Kälteenergie, mit Fluide führenden Leitungen zur Versorgung von Räumen eines Gebäudes mit Wärme und mit Fluide führenden Leitungen zur Versorgung der Räume des Gebäudes mit Kälte.

Gebäudesysteme besitzen in vielen Fällen zu unterschiedlichen Zeitpunkten einen Kühlbedarf oder einen Heizbedarf. So muss üblicherweise im Winter ein Gebäude geheizt werden, während im Hochsommer häufig eine Kühlung gewünscht wird. In den Übergangsjahreszeiten im Frühling und Herbst tritt auch der Fall ein, dass Nachts noch eine Heizung, tagsüber dagegen eine Kühlung gewünscht wird. Die Gebäude müssen also einerseits zu bestimmten Zeiten geheizt werden und andererseits zu anderen Zeitpunkten gekühlt werden.

Um beiden Anforderungen zu genügen, besitzen die Gebäude Heizungsanlagen, die eine Erwärmung des Gebäudes beziehungsweise der in ihm befindlichen Räume ermöglichen, und sie besitzen in einigen Fällen auch Kälteanlagen mit Kälteerzeugern, um eine Kühlung der Räume in den Gebäuden bewirken zu können.

Die in einer Wärmequelle, beispielsweise in einer Heizungsanlage, erzeugte Wärme muss dann im Haus entsprechend verteilt werden, beispielsweise Heizkörpern zugeführt werden. Dafür sind entsprechende Leitungen erforderlich, um mittels eines Fluides (meist Wasser oder Wasser mit Zusätzen etwa zum Frostschutz) die Wärmeenergie zu transportieren und den Heizkörpern in den Räumen zuzuführen.

In ähnlicher Form wird die von einem Kälteerzeuger hervorgerufene Kühlung ebenfalls mittels Fluiden und entsprechender Leitungen in den Räumen des Gebäudes verteilt.

In dem betreffenden Gebäude befindet sich also eine Vielzahl an Leitungen für die Versorgung mit Heizenergie einerseits und mit Kälteenergie andererseits.

Bekannt sind darüber hinaus bereits Kälteanlagen zur Kühlung von Gebäuden, die solarthermisch betrieben werden. Ein Beispiel ist in der DE 197 35 334 C2 beschrieben. Hier wird durch einen entsprechenden Misch- und Kondensiervorgang die solarthermische Energie genutzt, um eine Kühlung hervor zu rufen.

Aus der DE 20 2006 018 579 U1 ist eine Vorrichtung bekannt, die unter Einsatz einer Biomasse-Heizvorrichtung und eines Sonnenkollektors in der Lage ist, automatisch zu heizen, zu kühlen und Wasser zu erwärmen.

Es stellt sich allerdings das Problem, dass mit derartigen Vorrichtungen zwar verschiedene thermische Energieformen erzeugt werden können, dass damit jedoch noch keine bedarfsgerechte Versorgung der Räume eines Gebäudes mit der in dem jeweiligen Raum zu einem bestimmten Zeitpunkt gewünschten Energieform erfolgen kann.

Aufgabe der Erfindung ist es einen Vorschlag für eine derartige bedarfsgerechte Versorgung der Räume eines Gebäudes zu machen, bei dem möglichst effektiv die vorhandenen technischen Ressourcen genutzt werden können.

Diese Aufgabe wird bei einer gattungsgemäßen Anordnung mit der Erfindung dadurch gelöst, dass eine Umschalteinrichtung vorgesehen ist, dass die Umschalteinrichtung mit der oder den Quellen für Heizenergie und mit der oder den Quellen für Kälteenergie über Fluide führende Leitungen und außerdem mit den Leitungen zur Versorgung der Räume des Gebäudes verbunden ist und dass die Umschalteinrichtung so aufgebaut ist, dass sie die Wärme und die Kälte mittels der Fluide aus den Leitungen von den Quellen für Heizenergie und den Quellen für Kälteenergie steuerbar in die Leitungen zur Versorgung der Räume des Gebäudes einspeist.

Mit der Erfindung wird es möglich, eine Kälteanlage mit einer Heizungsanlage zu kombinieren und in einem Gebäude effektiv sowohl den Kühlbedarf als auch den Heizbedarf mittels einer Schnittstelle zu decken. Dies hat den großen Vorteil, dass eine Reihe von Komponenten mehrfach genutzt werden kann, um einerseits die Kühlung und andererseits die Heizung der Räume sicherzustellen und die entsprechende thermische Energie mittels Fluidtransport zu verteilen.

Die Erfindung macht von der Erkenntnis Gebrauch, dass das Bedürfnis nach Kälte und das Bedürfnis nach Wärme nicht gleichzeitig auftreten. In einem Raum wird zu einem bestimmten Zeitpunkt nur entweder Wärme beziehungsweise Heizung oder aber Kühlung gewünscht.

Es ist also möglich, für die Versorgung der entsprechenden Räume mit Kühlung einerseits oder Heizung andererseits Leitungen in einem Gebäudesystem gemeinsam zu verwenden, auch wenn eine solche Kombination bisher noch nicht praktisch umgesetzt wurde. Genau diese bisher in der Praxis noch nicht eingesetzte Möglichkeit nutzt nun die Erfindung. Auch die zum Transport der Fluide eingesetzten Pumpen und gegebenenfalls Mischer können gemeinsam genutzt werden; es sind nicht zwei, sondern nur noch ein System zur Versorgung in dem Gebäude mit entsprechender thermischer Energie erforderlich.

Dies bedeutet, dass bei dem Vorsehen einer erfindungsgemäßen Umschalteinrichtung die erforderlichen Hydraulikkreise nicht doppelt vorgesehen werden müssen. Die Elemente des Heizkreises, des Kühlkreises und der Verbindungen dazwischen können jeweils mehrfach für verschiedene Zwecke genutzt werden, und zwar abhängig davon, welcher Betriebsfall gerade eintritt.

Die Umschalteinrichtung führt dazu, dass die Komponenten der Station selbst, also beispielsweise die Pumpen, die Ventile, die Mischer, die Rückschlagklappen, die Schieber und weitere, von vornherein auf die Gesamtanlage abgestimmt werden können. Dies betrifft beispielsweise die auftretenden Druckverluste und den gewünschten Volumenstrom jeweils bei bestimmten Betriebssituationen. Die verschiedenen Hydraulikkomponenten können alle elektrisch vorverdrahtet werden.

Das bedeutet, dass nicht erst vor Ort, sondern schon bei der Planung und Vorbereitung der Anlage diese Umschaltstation oder Umschalteinrichtung unter Berücksichtigung des Gesamtkonzeptes in Ruhe und ohne Störung durch den Betrieb an einer Baustelle vorbereitet werden kann.

Bevorzugt wird dabei die Station abschieberbar ausgebildet. Die jeweiligen Eingänge und Ausgänge können für einen Monteur oder Handwerker beschriftet werden. Die komplette Umschalteinrichtung kann dann in einfachster Weise unmittelbar auf der Baustelle montiert werden. Für den Monteur oder Handwerker bestehen keinerlei Probleme darin, dass er noch bestimmte Pumpen oder sonstige Hydraulikkomponenten auswählen und an bestimmten Stellen der Gesamtanlage einbauen muss, da diese Hydraulikkomponenten alle bereits zentral und an der richtigen Position in der Umschalteinrichtung vorgesehen sind.

Dadurch können Installationsfehler nahezu ausgeschlossen werden.

Insgesamt entsteht dadurch die Möglichkeit, die erfindungsgemäße Anordnung in Form eines "plug and play" zu installieren.

Hierzu schafft die Erfindung eine speziell ausgebildete Umschalteinrichtung, um in einem Gebäude zwischen der Versorgung mit Wärme mittels insbesondere einer Solarheizung (bevorzugt mit Pufferspeicher) und einer Kälteanlage in Form insbesondere einer thermisch getriebenen Absorptions-Kälteanlage geeignet umschalten zu können. Das Gebäude tritt dabei als Verbraucher mit zeitabhängig unterschiedlichem Kühl- und Heizbedarf auf.

Mit der erfindungsgemäß eingesetzten Umschalteinrichtung wird demnach eine Schnittstelle zwischen einem thermisch getriebenen Kälteerzeuger, einer Wärmequelle, einer Energiesenke und einem Verbraucher geschaffen. Dabei kann der Verbraucher zu verschiedenen Zeitpunkten, also zeitversetzt, sowohl Wärmebedarf als auch Kältebedarf haben.

Bevorzugt ist vorgesehen, dass ein Kälteerzeuger mit drei Hydraulikkreisen eingesetzt wird. In der Umschalteinrichtung sind dann die für diese drei Hydraulikkreise erforderlichen Pumpen bereits enthalten.

Durch das Umschalten der Umschalteinrichtung kann zwischen beispielsweise drei Betriebszuständen umgeschaltet werden, nämlich etwa zwischen den Betriebszuständen für "Heizen", "Kühlen über Kältemaschine" und "Kühlen über Rückkühleinrichtung, also mittels einer sogenannten freien Kühlung. Durch diese erwähnte freie Kühlung kann darüber hinaus auch quasi kostenlos Umgebungskälte aus der Außenluft zur Kühlung genutzt werden.

Bevorzugt ist es ferner vorgesehen, dass durch einige hydraulische Bauteile die Hydraulikkreise jeweils so verschaltet sind, dass mehrere Betriebsvarianten möglich werden.

Mit ein und derselben Umschalteinrichtung können beispielsweise folgende drei Betriebsvarianten durchgeführt werden:
Variante 1: Im Verbraucher (also dem betrachteten Gebäude) ist ein Wärmebedarf vorhanden, welcher durch eine Wärmequelle gedeckt wird. Zu diesem Zweck wird der Verbraucher mit der Wärmequelle verbunden und ein entsprechender Volumenstrom eines Fluides erzeugt und transportiert.

Die Wärmequelle kann auch einen Pufferspeicher aufweisen, so dass dieser Pufferspeicher als Ausgangspunkt des Volumenstromes genutzt wird.

Die Variante 1 für den Heizfall ist mit einem Speicher gerade bei Gebäuden besonders sinnvoll, die sowohl heizen als auch kühlen müssen. Erfindungsgemäß entsteht hier eine besonders elegante, platz- und preisgünstige Möglichkeit. Es wird nur ein gemeinsames Gebäudesystem zum Heizen und Kühlen benötigt und es entfällt ein Bedarf an zusätzlichen Pumpen oder Mischern.

Variante 2: Im Verbraucher ist ein Kältebedarf vorhanden, welcher durch einen thermisch getriebenen Kälteerzeuger gedeckt wird, also beispielsweise eine Absoprtionskältemaschine. Die Wärmequelle, welche die Antriebsenergie für den Kälteerzeuger bereit stellt, und der Kälteerzeuger selbst erhalten durch den auftretenden Bedarf gesteuerte Einschaltsignale. Darüber hinaus werden ihnen Volumenströme des Fluides zugeführt.

Außerdem wird gegebenenfalls ein Volumenstrom zwischen dem Kälteerzeuger und einer Energiesenke sichergestellt. Dabei kann zur notwendigen Rückkühlung ein trockener oder nasser Kühlturm oder auch eine Erdsonde oder auch ein Schwimmbecken eingesetzt werden. Durch den Volumenstrom kann die zugeführte Leistung, welche sich aus Antriebsleistung, Kälteleistung und elektrischer Leistung zusammensetzt, abgeführt werden.

Variante 3: Im Verbraucher ist ein Kältebedarf vorhanden, welcher direkt durch die Energiesenke gedeckt werden kann. Die Energiesenke kann dabei beispielsweise ein Außenluftkühler oder die erwähnte Rückkühleinrichtung ein. Diese Variante tritt in dem Fall ein, dass eine freie Kühlung ohne Kältemaschine aufgrund einer ausreichend niedrigen Außenlufttemperatur möglich ist, die auch zum Kühlen des Gebäudes genutzt werden kann. Für den Fall, dass sich die Energiesenke auf einem geeigneten Temperaturniveau befindet, das für die Deckung des Kältebedarfs im Verbraucher ausreichend niedrig ist, wird die Umschalteinrichtung so verschaltet, dass der Verbraucher direkt mit der Energiesenke in Form etwa der Rückkühleinrichtung verbunden und ein entsprechender Volumenstrom erzeugt wird.

Da die freie Kühlung eines Raumes in einem Gebäude über die Außenluft mit entsprechender Temperatur eine kostenlos und darüber hinaus auch besonders umweltfreundlich zur Verfügung stehende Energie ist, ist diese Variante einer Kühlung bei Gebäudesystemen mit einer großen Masseaktivierung besonders sinnvoll, wenn sie eingesetzt werden kann. Insbesondere können die kühlen Temperaturen in der Nacht für den darauffolgenden Tag auf diese Weise gespeichert werden.

Diese Variante 3 ermöglicht beispielsweise eine Verlängerung des tägliches Kühlbetriebes durch Nachtkühlung über die Rückkühleinrichtung. Alternativ ist auch eine Verwendung der eingesparten Antriebsenergie für die Nicht eingeschaltete Kältemaschine für eine Warmwasserbereitung oder eine Heizungsunterstützung möglich. Durch die erfindungsgemäße Anordnung mit einer Umschalteinrichtung kann je nach äußeren Anforderungen zwischen den verschiedenen Varianten umgeschaltet und die jeweils heranzuziehenden Aggregate hydraulisch miteinander verbunden werden.

Mittels einer erfindungsgemäßen Umschalteinrichtung kann eine integrierte Regelung geschaffen werden, die mit Hilfe von Temperatursensoren selbstständig zwischen den erwähnten einzelnen Betriebsvarianten umschaltet. Über eine Busleitung ist die Kommunikation auch mit anderen Regelungen möglich.

Die Umschalteinrichtung kann fertig vormontiert werden und wird dann bauseits nur noch mit den anderen Komponenten des Systems verbunden.

Auch Sicherheitseinrichtungen, die etwa ein Sicherheitsventil und eine Druckmesseinrichtung aufweisen, sind für den Verbraucher und die Energiesenke ebenfalls schon vormontiert.

Darüber hinaus werden Anschlüsse für Druckausgleichsbehälter vorgesehen, welche entsprechend dem Anlagevolumen und der Temperatur auszulegen sind.

Die in der Umschalteinrichtung befindlichen elektrischen Bauteile sind bevorzugt vorverdrahtet. Damit wird die Umschalteinrichtung steckerfertig und ist bereits mit allen Eingängen und Ausgängen für etwaige andere Anlagenkomponenten versehen.

Von besonderem Vorteil ist es außerdem, wenn eine Systemtrennung in dem Kreis der Energiesenke vorgesehen wird, was bei Frostgefahr sinnvoll ist. Auch diese Systemtrennung kann bauseits schon vorgesehen werden.

Mit der Erfindung wird eine weitere Möglichkeit bereitgestellt, die für eine Art Wärmepumpenfunktion nutzbar ist. Mit einer solchen Funktion ist eine Nutzung von Energie auf einem niedrigen Temperaturniveau möglich. Als Energiequelle kann zum Beispiel im Winter in diesem Falle ein Solarkollektor (oder mehrere Solarkollektoren) benutzt werden.

Von besonderem Vorteil ist es, wenn mehrere 2/3-Wege-Ventile in der Umschalteinrichtung vorgesehen werden. Mit derartigen Ventilen mit untereinander relativ gleichartiger Ausbildung lässt sich besonders kostengünstig und mit erprobten Ventilelementen eine solche Umschalteinrichtung aufbauen.

In einer ebenfalls bevorzugten alternativen Ausführungsform werden anstelle der mehreren 2/3-Wegeventile ein oder mehrere, insbesondere zwei Fünf-Wege-Mischer eingesetzt. Bei einer derartigen Variante sind insbesondere nur noch zwei Ventile erforderlich. Dies hat den Vorteil, dass auch nur diese beiden mit Druckverlust behafteten Ventile durchströmt werden. Bei einigen Betriebszuständen entsteht ansonsten die Möglichkeit, dass bis zu drei 2/3-Wege-Ventile nacheinander durchströmt werden müssen, mit entsprechend hohen Druckverlusten, hoher Punktenergie und relativ hohem Stromverbrauch. Dies kann in der Variante mit den Fünf-Wege-Mischern vollständig vermieden werden.

Die alternative Ausführungsform mit den zwei Fünf-Wege-Mischern benötigt weniger Bauteile und dadurch trotz des etwas aufwändigeren Fünf-Wege-Mischers auch geringere Kosten. Die Bauweise wird kompakter und es kann Pumpenergie eingespart werden. Auch der Stromverbrauch lässt sich bei dieser Variante reduzieren.

Eine geeignete regelungstechnische Abstimmung der Mischerstellung insbesondere bei den Fünf-Wege-Mischern kann Teil der Umschalteinrichtung sein und/oder unmittelbar an dieser befestigt werden. Sie würde damit zu einem Teil der entsprechenden mittels plug und play installierbaren Station.

Alternativ kann die Regelung auch mittels Wandmontage separat ausgeführt werden. Grundsätzlich denkbar wäre auch, diese üblicherweise elektronische Regelung in eine Systemregelung der Anlage zu integrieren.

Bei einer bevorzugten Ausführungsform jedoch eine unabhängige Regelung mit einer Schnittstelle zur übergeordneten Systemregelung versehen. Die Station mit der Umschalteinrichtung kann dann auch von anderen Regelungen angesteuert werden.

Die Funktionen und der nähere Aufbau werden in der folgenden Beschreibung der Figuren deutlicher werden. Gezeigt ist jeweils eine ähnliche Schemaübersicht, bei der die entsprechende Schaltung jeweils bei einer anderen Betriebsvariante veranschaulicht ist.

Im Folgenden werden an Hand der Zeichnung zwei Ausführungsbeispiele der Erfindung näher beschreiben. Es zeigen:
- **Figur 1**: eine Übersichtsdarstellung mit einem Anlagenschaltbild für eine erste Ausführungsform einer erfindungsgemäßen Anordnung;
- **Figur 2**: Eine schematische Darstellung eines Auszugs aus einer erfindungsgemäßen Anordnung aus Figur 1 mit einer Umschalteinrichtung;
- **Figur 3**: eine erste Betriebsvariante des Auszugs der Anordnung mit der Umschalteinrichtung aus Figur 2;
- **Figur 4**: eine zweite Betriebsvariante des Auszugs der Anordnung mit der Umschalteinrichtung aus Figur 2;
- **Figur 5**: eine dritte Betriebsvariante des Auszugs der Anordnung mit der Umschalteinrichtung aus Figur 2;
- **Figur 6**: eine schematische Darstellung eines Auszugs aus einer erfindungsgemäßen Anordnung aus Figur 1 mit einer alternativen Umschalteinrichtung;
- **Figur 7**: eine erste Betriebsvariante des Auszugs der Anordnung mit der Umschalteinrichtung aus Figur 6;
- **Figur 8**: eine zweite Betriebsvariante des Auszugs der Anordnung mit der Umschalteinrichtung aus Figur 6;
- **Figur 9**: eine dritte Betriebsvariante des Auszugs der Anordnung mit der Umschalteinrichtung aus Figur 6;
- **Figur 10**: eine schematische Darstellung eines Auszugs aus einer erfindungsgemäßen Anordnung aus Figur 1 mit einer alternativen Umschalteinrichtung; und
- **Figur 11**: eine schematische Darstellung mit den hydraulischen Bauelementen zum Betrieb im Wärmepumpenmodus.

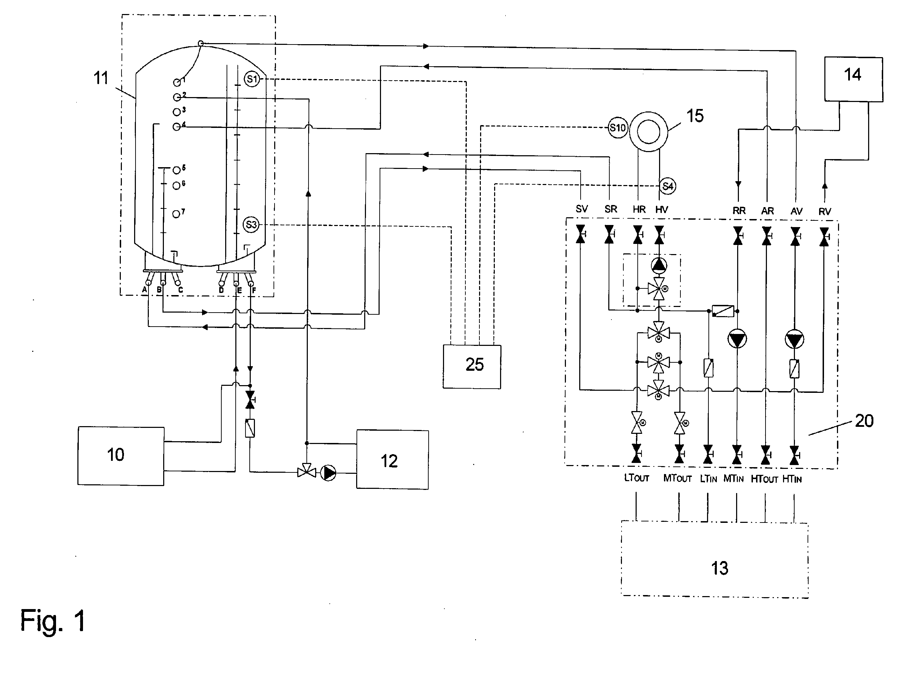

In der **Figur 1** ist schematisch ein Überblick über eine Anordnung gegeben, die verschiedene Quellen und Verbraucher für unterschiedliche Energieformen zeigt.

Die Darstellung ist rein schematisch; eine Reihe von Elementen ist fortgelassen, um das Schema verständlicher zu halten. Zu erkennen ist links unten schematisch eine Solaranlage 10, die mittels Solarkollektoren gesammelte Sonnenenergie in ein erwärmtes Fluid umsetzt, das über eine Leitung von der Solaranlage 10 zu einem Pufferspeicher 11 geführt wird. In dem Pufferspeicher 11 wird dieses erwärmte Fluid eingeschichtet. Der Pufferspeicher 11 stellt in seinem oberen Bereich warmes Wasser zur Verfügung, während sich in seinem unteren Bereich kühleres Wasser befindet.

Weiter ist eine Heizeinrichtung 12 vorgesehen. Die Heizeinrichtung 12 erhält kühleres Wasser aus dem unteren Bereich des Pufferspeichers 11 und führt heißes Wasser in den oberen Bereich des Pufferspeichers 11 zurück.

Weiter ist eine Quelle 13 für Kälteenergie vorgesehen. Diese Quelle weist eine Absorptionskältemachine 13 auf. Kältemaschinen wie die Absorptionskältemaschine 13 weisen zu ihrem Betrieb eine Rückkühleinrichtung 14 auf. Diese Rückkühleinrichtung 14 kann beispielsweise aus einem trockenen Rückkühler, einem Nasskühlturm, einer Erdsonde oder beispielsweise auch einem Swimmingpool bestehen. Sie kann auch mehrere dieser Elemente aufweisen und auch andere Rückkühlelemente besitzen.

Das Vorsehen einer Rückkühleinrichtung 14 für eine Absorptionskältemaschine 13 ist für deren Betrieb praktisch erforderlich.

In der dargestellten Ausführungsform wird wie noch im Folgenden näher erläutert, die Existenz der Rückkühleinrichtung 14 für eine der Betriebsvarianten separat neben dem Vorsehen der Kältemaschine 13 besonders genutzt und dadurch ein erheblicher Vorteil erzielt.

Schließlich ist als Verbraucher ein Hauskreis 15 angedeutet. Dieser Hauskreis 15 dient zur Versorgung der Räume eines Gebäudes mit Wärme und mit Kälte.

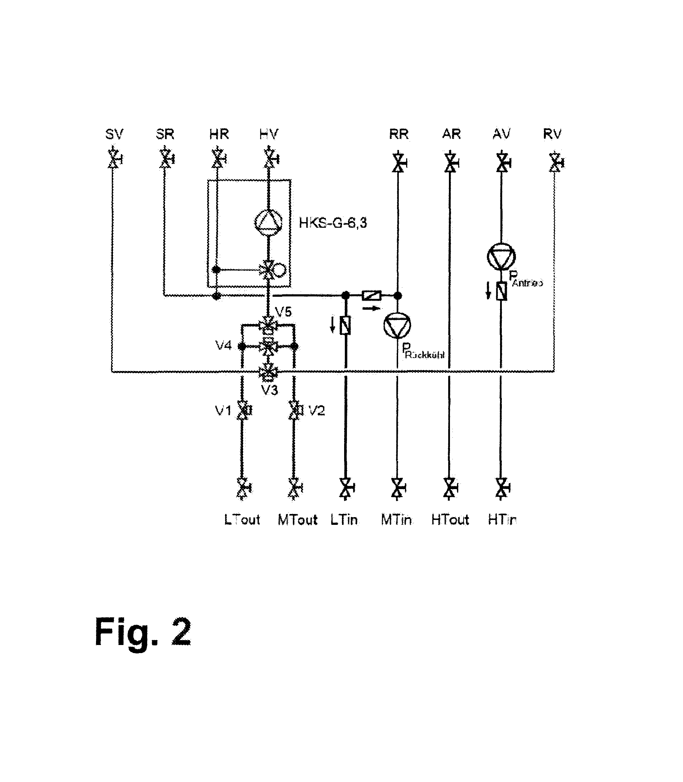

Die Elemente 11, 13, 14 und 15 sind direkt, die Elemente 10 und 12 indirekt mit einer Umschalteinrichtung 20 verbunden. Die Umschalteinrichtung 20 enthält eine Vielzahl von Elementen für eine hydraulische Steuerung, die im Zusammenhang mit den Figuren 2 bis 5 näher beschrieben werden.

Angedeutet ist darüber hinaus eine elektronische Steuerung 25. Diese elektronische Steuerung 25 kann mit der Umschalteinrichtung 20 örtlich und auch funktionell verbunden sein und steuert im Übrigen die elektronischen Elemente unter anderem des Pufferspeichers 11.

In **Figur 2** ist schematisch ein Überblick über die Umschalteinrichtung 20 dargestellt, die in der erfindungsgemäßen Anordnung beispielsweise in Figur 1 Verwendung finden kann. Alle in der Figur 2 erkennbaren Elemente sind Teil der Umschalteinrichtung 20; aus dieser Umschalteinrichtung 20 führen dann über im Folgenden näher erläuterte Anschlüsse Leitungen heraus, die zu den weiteren, in der Figur 1 dargestellten Elementen der erfindungsgemäßen Anordnung führen.

Zu sehen sind jeweils die Anschlüsse an die von außen anzuschließenden Volumenströme aus den unterschiedlichen Kreisen der Anordnung mit ihren Quellen für Heizenergie 10, 11, 12 für Kälteenergie 13, 14 und zur Versorgung der Räume eines Gebäudes 15.

So sieht man links oben einen Anschluss SV an eine Leitung, die einen Speichervorlauf führt. Der Speicher bildet hier eine Quelle für Heizenergie. Daneben ist ein Anschluss SR an einen Speicherrücklauf zu sehen.

Aus der Umschalteinrichtung 20 führen daneben dann ein Anschluss HV an einen Hauskreisvorlauf und ein Anschluss HR an einen Hauskreisrücklauf.

Es folgen dann Anschlüsse RV für einen Rückkühlkreis-Vorlauf und RR für einen Rückkühlkreisrücklauf sowie Anschlüsse AV für einen Antriebskreisvorlauf und AR für einen Antriebskreisrücklauf.

Weitere Anschlüsse dienen als direkte Anschlüsse an eine Kältemaschine 13. Es sind ein Ausgang LTₒᵤₜ und ein Eingang LTᵢₙ für einen Kältekreis und je ein Anschluss MTₒᵤₜ und MTᵢₙ für einen Rückkühlkreis.

Ferner gibt es Anschlüsse HTₒᵤₜ und HTᵢₙ, welche ebenfalls zur Kältemaschine 13 führen.

Die Umschalteinheit besitzt ferner zwei Durchgangsventile V1 und V2 sowie drei 2/3-Wege-Ventile V3, V4 und V5.

Außerdem sind zwei Rückschlagklappen R1 und R2 sowie drei Pumpen vorgesehen, nämlich eine Pumpe P_{Rückkühl} im Rückkühlkreis, eine Pumpe P_{Antrieb} im Antriebskreis und eine Pumpe P_{H} im Hauskreis beziehungsweise in der Heizkreisstation.

Ein Bereich HKS ist speziell als Heizkreisstation im Inneren in der Umschalteinrichtung in der Figur 2 herausgezeichnet. Neben der Pumpe P_{H} ist hier außerdem noch ein Mischer M_{H} mit Motor vorgesehen.

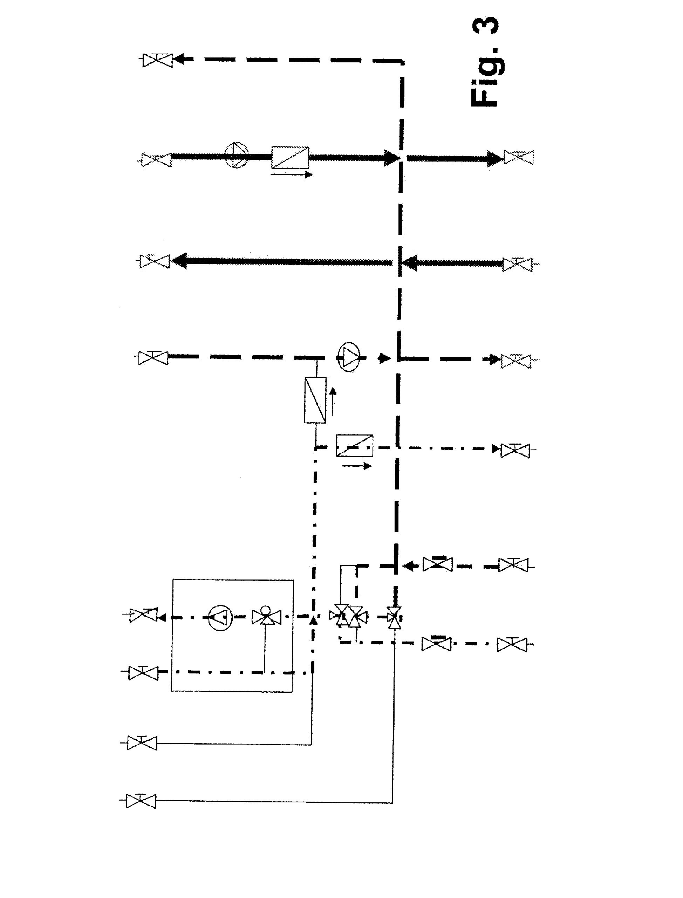

Die weiteren Figuren 3 bis 5 zeigen drei Betriebsvarianten, die mit der in Figur 2 dargestellten Umschalteinrichtung in der erfindungsgemäßen Anordnung realisiert werden können.

Die verwendeten Linien sollen in etwa das Temperaturniveau darstellen. Die dick eingezeichneten Linien zeigen Leitungen, die ein Fluid auf einem hohen Temperaturniveau führen. Gestrichelte Linien zeigen Leitungen mit einem Fluid auf einem mittleren Temperaturniveau. Strichpunktierte Linien zeigen Leitungen mit einem Fluid auf einem niedrigen Temperaturniveau.

Dabei ist in der **Figur 3** der normale Kühlfall mit einem Betrieb über eine Kältemaschine 13 dargestellt. In dem dargestellten Fall ist der mit dicken Linien dargestellte Kreis die Antriebsenergie für die Adsorptionskältemaschine. Die Pumpe saugt aus dem oberen Bereich des Speichers 11 Wasser mit einer hohen Temperatur. Im Nennbetrieb sollen es beispielsweise 72°C sein, allerdings ist die Temperatur im Speicher 11 hier nicht regelbar. Dazu wäre ein thermisches Mischventil in der Umschalteinrichtung 20 eine mögliche Abhilfe, um die Kältemaschine mit konstanter Temperatur zu versorgen.

Der Rücklauf (HTₒᵤₜ) aus der Kältemaschine 13 wird mit einer Temperatur von 65°C in den Speicher 11 wieder eingeschichtet. Die aus der Antriebswärme erzeugte Kälte wird über den LTₒᵤₜ-Anschluss ausgegeben.

Das Ventil V1 wird geschaltet und gibt den Weg frei, danach strömt die Kälte zum Ventil V5. Dieses Ventil ist ein 2/3-Wege-Ventil. Derartige Ventile besitzen einen Anschluss A und einen Anschluss B (nicht eingezeichnet), den sie jeweils an einen mittleren Anschluss AB freigeben. Ventil V5 ist in diesem Fall auf einen Durchgang von A zu AB geschaltet und leitet die Kälte weiter an die Heizkreisstation HKS und wird dort in den Hauskreis gepumpt und somit zu dem Kälteverteilsystem, wobei der Mischer M_{H} im Kühlfall voll offen und auf Durchgang steht. Im Nennbetrieb sind es beispielsweise 15 °C im Vorlauf und 18 °C im Rücklauf, die wieder über den LTᵢₙ -Anschluss in die Kältemaschine 13 gehen.

Kälteverteilung und Wärmeverteilung sind vorzugsweise über eine Hydraulik realisiert und werden beide über die Heizkreisstation HKS gespeist.

Bei der Gewinnung von Kälte durch Wärme fällt in der Kältemaschine 13 auch Temperatur im mittleren Temperaturniveau an, die kälteprozessbedingt über die zugeordnete Rückkühleinrichtung 14 an die Umgebung oder gegebenenfalls an einen Pool abgegeben wird. Über den MTₒᵤₜ-Anschluss wird eine Temperatur von 32°C ausgegeben. Hier ist das Ventil V2 auf Durchgang geschaltet. Da das Ventil V5 auf einen Durchgang von A nach AB geschaltet ist, ist dieser Weg blockiert und es bleibt nur die Möglichkeit über Ventil V4 zu gehen. Dieses ist auf einen Durchgang von B nach AB geschaltet und gibt somit den Weg frei entweder direkt zur Rückkühleinrichtung 14 oder in frostschutzsicheren gebauten Anlagen zu einem Plattenwärmetauscher. Zurück kommt eine Temperatur von 27°C im Auslegungsfall.

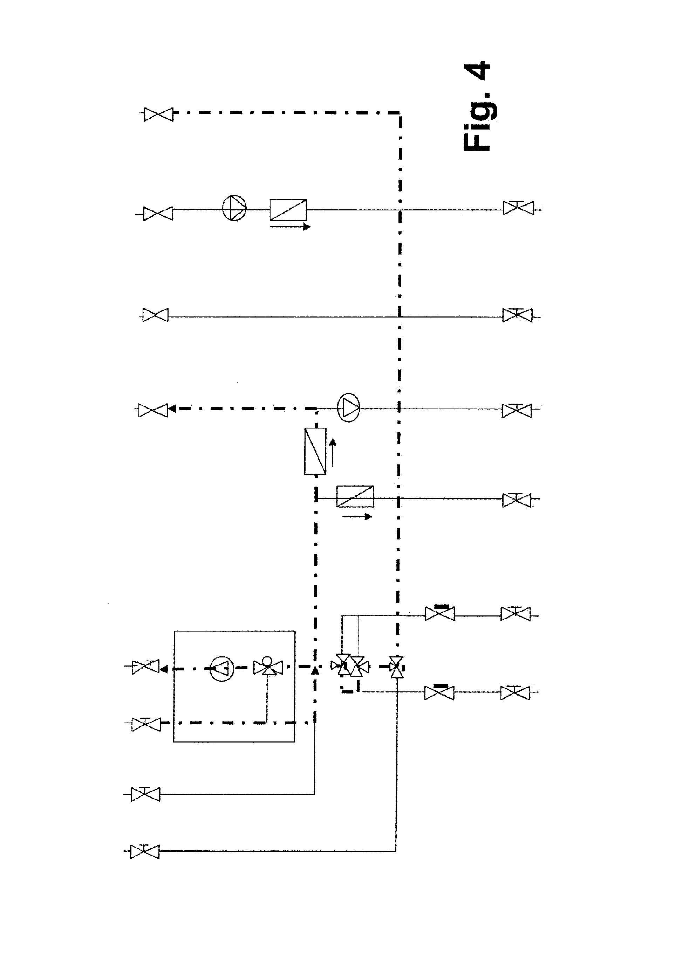

In der **Figur 4** ist der Kühlfall bei einer sogenannten freien Kühlung dargestellt. Hier wird die Kältemaschine 13 ausgeschaltet und lediglich die Hauskreispumpe läuft. Die Ventile werden von der Regelung so angesteuert, dass diese die Hydraulik so verändern, dass die Temperatur direkt von der Rückkühleinrichtung 14 in den Hauskreis geleitet wird, beginnend mit Ventil V3. Dieses ist auf einen Durchgang von B nach AB geschaltet. Der Weg führt direkt weiter zum Ventil V4, welches auf einen Durchgang von AB nach A geschaltet wird. Das Ventil V5, welches entscheidet, ob geheizt oder gekühlt wird, ist dann entsprechend auf einen Durchgang von A nach AB geschaltet. Danach ist der Weg frei zum Hauskreis. Im Rücklauf ist nur der Weg zurück zur Rückkühleinrichtung 14 frei.

Mit dieser Betriebsvariante wird sehr vorteilhaft davon Gebrauch gemacht, dass die Kältemaschine 13 eine Rückkühleinrichtung 14 aufweist. Im normalen Auslegungsfall ist die Rückkühleinrichtung 14 recht leistungsstark. Sie kann daher die Kühlfunktion der Kältemaschine 13 komplett übernehmen, wenn bestimmte Randbedingungen gegeben sind, beispielsweise die Temperatur der Umgebungsluft niedrig genug ist.

Auf diese Weise kann die Antriebenergie für die Kältemaschine 13 gespart werden oder der tägliche Kühlbetrieb verlängert werden. Zu denken ist dabei an eine Nachtkühlung.

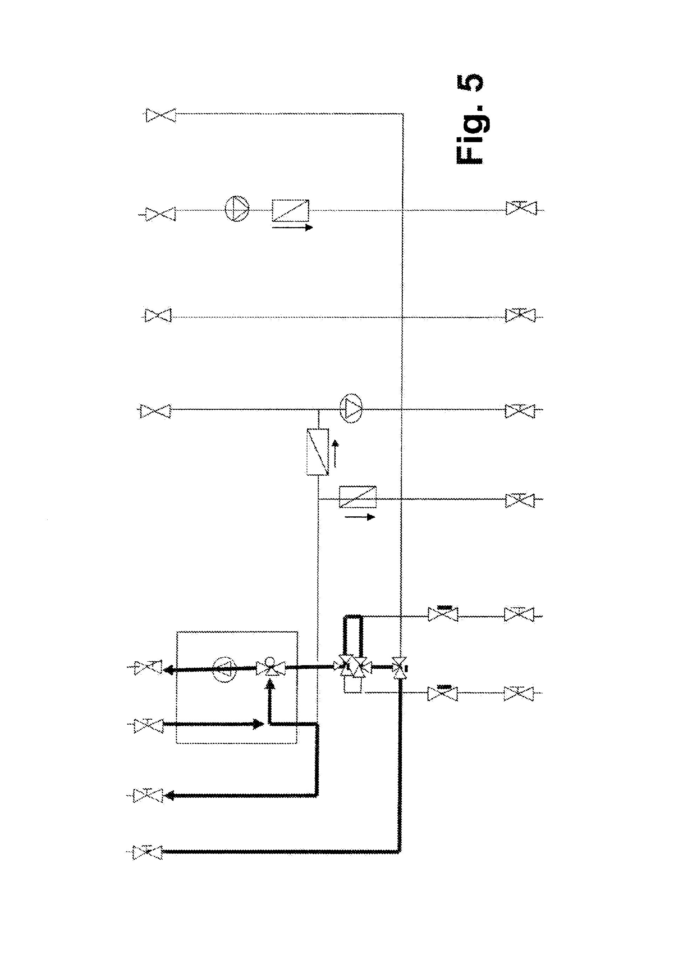

**Figur 5** zeigt den Heizfall über den Speicher. Der Speicher fungiert als Energiemanager und liefert nicht nur die Antriebsenergie im Kühlfall, sondern auch die Heizenergie für das Gebäude in den Wintermonaten. Auch in diesem Fall läuft wieder nur die Hauskreispumpe und saugt aus dem Speicher im mittleren Bereich, dem Heizungspuffer, bei einer Temperatur von ca. 50 - 70°C. Die Wärme gelangt zunächst zum Ventil V3. Dies ist auf Durchgang von B nach AB geschaltet und anschließend direkt auf Ventil V4, welches auf Durchgang von AB nach B geschaltet ist. Ventil V5 ist im Heizfall in einer Stellung mit einem Durchgang von B nach AB. Im Heizbetrieb wird ggf. je nach Temperatur, die aus dem Speicher 11 kommt, der Rücklauf beigemischt um die gewünschte Vorlauftemperatur zu erreichen. Die Vorlauftemperatur wird von der Regelung in Abhängigkeit von der Außentemperatur ermittelt. Der Rücklauf wird wieder zum Speicher 11 zurück geleitet.

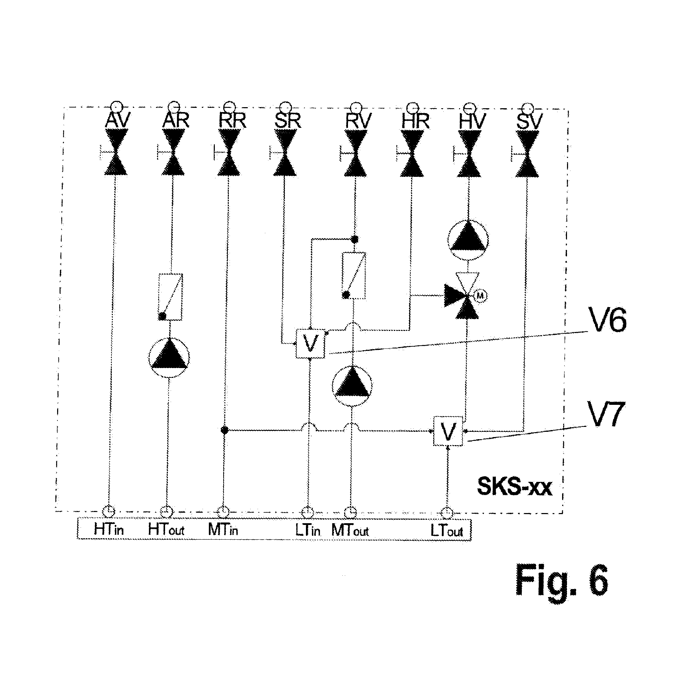

In der **Figur 6** ist eine alternative Ausführungsform für eine Umschalteinrichtung 20 dargestellt, die eine modifizierte erfindungsgemäße Anordnung ermöglicht.

Die Darstellung in der Figur 6 entspricht mit den Anschlüssen der Darstellung in der Figur 2. Lediglich die Reihenfolge ist geändert.

Der wesentliche Unterschied besteht darin, dass anstelle der drei 2/3-Wege-Ventile V3, V4 und V5 zwei Fünf-Wege-Ventile V6 und V7 vorgesehen ist.

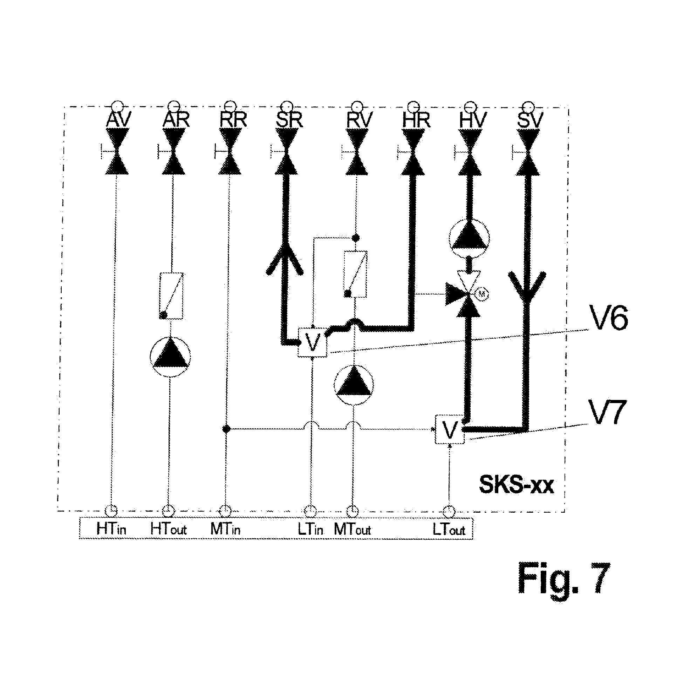

In der **Figur 7** ist durch die Einzeichnung dickerer Linien die Betriebsart "Heizen" dargestellt, also ähnlich der Situation in der Figur 5.

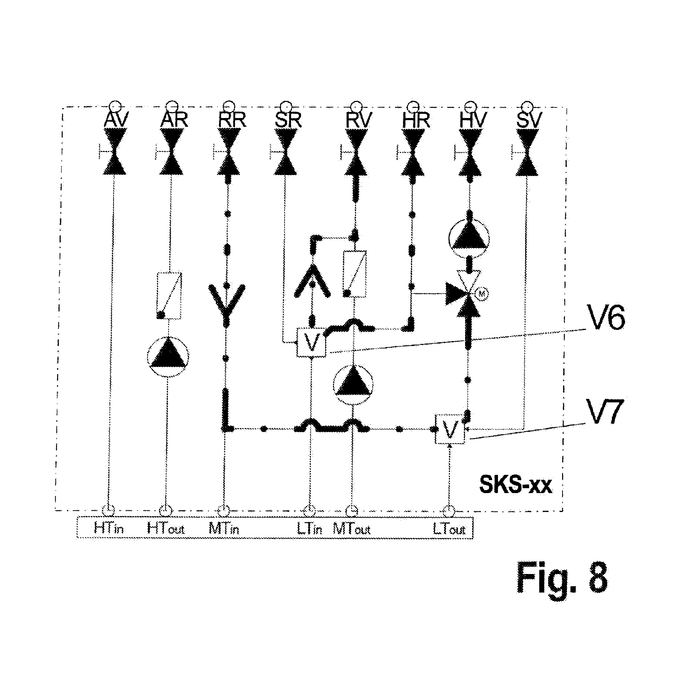

Die **Figur 8** zeigt durch die besonderer Hervorhebung strichpunktierter Linien die Betriebssituation für den Fall einer freien Kühlung, also analog etwa der Situation in der Figur 4. Auch die besonderen Vorteile der im Zusammenhang mit Figur beschriebenen Betriebsart sind hier möglich, also der stromsparende Einsatz nur einer Rückkühleinrichtung 14 bei ausgeschalteter zugehöriger Kältemaschine 13.

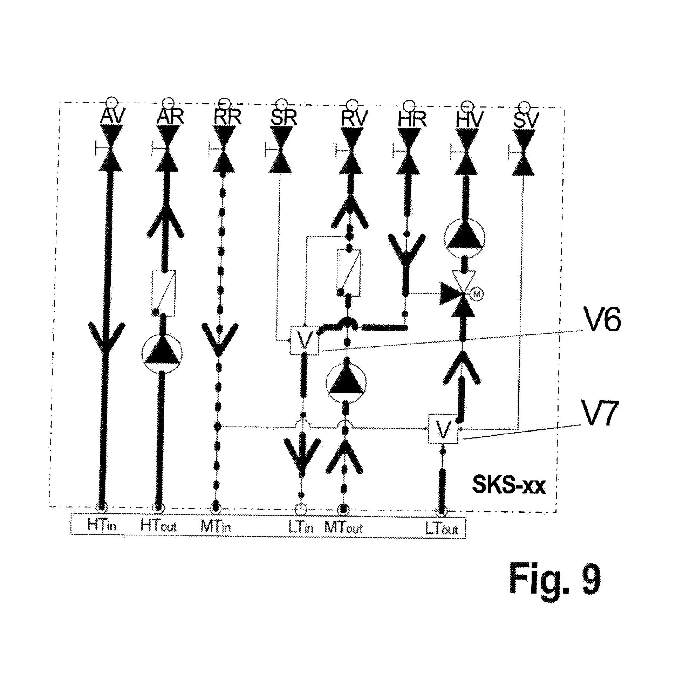

Die **Figur 9** zeigt durch eine besondere Hervorhebung gestrichelter Linien für Fluide mittlerer Temperatur den Fall der Kühlung über eine Kältemaschine, also in etwa entsprechend der Figur 3. Man sieht, dass hier auch die fetteren Linien für heißes Wasser und die strichpunktierten Linien für kaltes Wasser eingezeichnet sind, die bei diesem Einsatzfall auftreten.

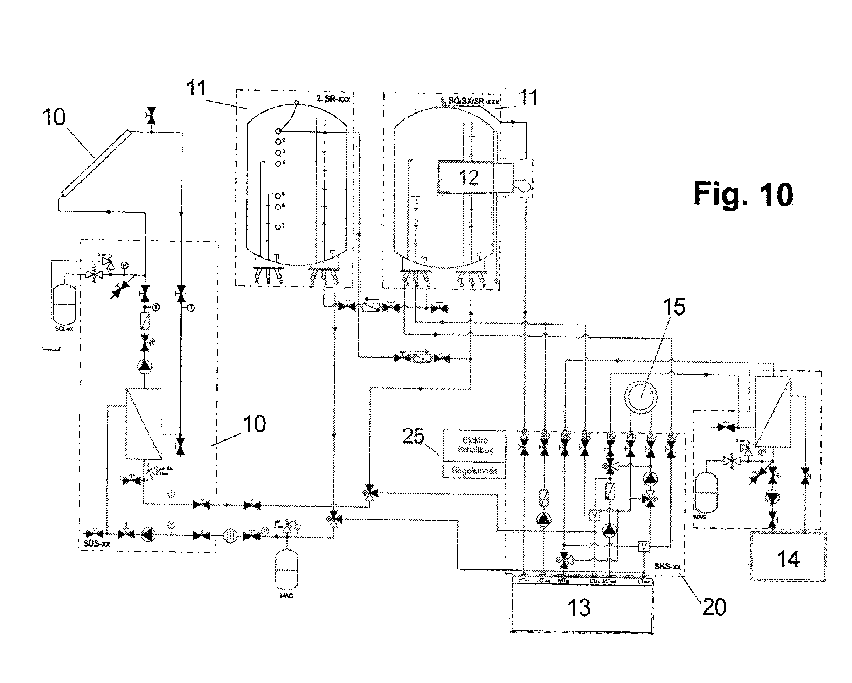

In der **Figur 10** ist schematisch ein Überblick über eine Anordnung gegeben, die einen optionalen Wärmepumpenmodus der Adsorptionskältemaschine zeigt. In diesem Überblick dient das Kollektorfeld als Niedertemperaturquelle. Zusammen mit der Nachheizung des Speichers wird die Energie aus dem Kollektorfeld auf ein mittleres Temperaturniveau angehoben, welches für ein Flächenheizungssystem nutzbar ist. Weitere Niedertemperaturquellen können ein Rückkühlwerk, Erdsonden oder Erdflächenkollektor sein.

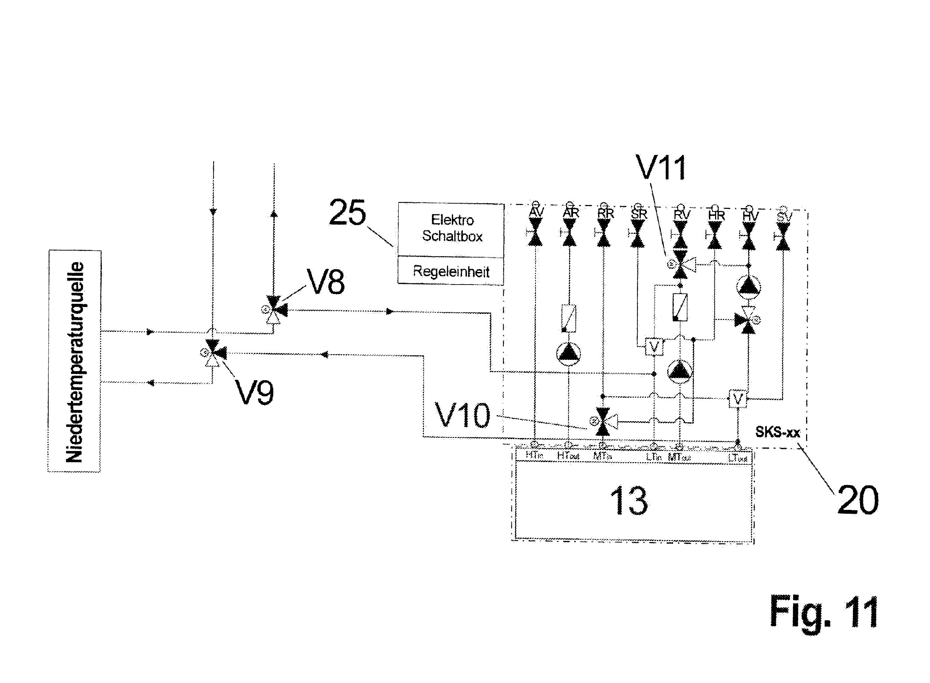

Die **Figur 11** zeigt den Wärmepumpenmodus im Detail und die dafür benötigten hydraulischen Bauteile. In diesem Modus wird die Adsorptionskältemaschine als Wärmepumpe betrieben und liefert dem Heizungssystem Wärme. Vorgesehen sind hier vier 2/3-Wege-Ventile V8, V9, V10 und V11. Um dem Heizungssystem Wärme liefern zu können, werden die Ventile V8 bis V11 von der Durchgangsstellung auf die Eckstellung motorisch gefahren, so dass die Niedertemperaturquelle durch den LT-Kreis der Adsorptionskältemaschine fließt und der MT-Kreislauf durch das Heizungssystem. Der HT-Kreis bleibt unverändert.

### Bezugszeichenliste

- AR: Antriebskreis-Rücklauf
- AV: Antriebskreis-Vorlauf
- HKS: Heizkreisstation
- HR: Hauskreis-Rücklauf
- HT: Antriebskreis einer Kältemaschine
- HV: Hauskreis-Vorlauf
- LT: Kältekreis einer Kältemaschine
- M_{H}: Mischer einer Heizkreisstation
- MT: Rückkühlkreis einer Kältemaschine
- P_{Antrieb}: Pumpe in einem Antriebskreis
- P_{H}: Pumpe in einem Hauskreis
- P_{Rückkühl}: Pumpe in einem Rückkühlkreis
- RR: Rückkühlkreis-Rücklauf
- R1: Rückschlagklappe 1
- R2: Rückschlagklappe 2
- RV: Rückkühlkreis-Vorlauf
- SR: Speicher-Rücklauf
- SV: Speicher-Vorlauf
- V1: Durchgangsventil 1
- V2: Durchgangsventil 2
- V3: 2/3-Wege-Ventil 3
- V4: 2/3-Wege-Ventil 4
- V5: 2/3-Wege-Ventil 5
- V6: 5-Wege-Ventil
- V7: 5-Wege-Ventil
- V8: 2/3-Wege-Ventil
- V9: 2/3-Wege-Ventil
- V10: 2/3-Wege-Ventil
- V11: 2/3-Wege-Ventil
- 10: Solaranlage
- 11: Pufferspeicher
- 12: Heizeinrichtung
- 13: Kältemaschine
- 14: Rückkühleinrichtung
- 15: Hauskreis, Räume eines Gebäudes
- 20: Umschalteinrichtung
- 25: elektronische Steuerung

## Patentansprüche

1. Anordnung mit mindestens einer Quelle für Heizenergie (10, 11, 12) und mindestens einer Quelle für Kälteenergie (13, 14), mit Fluide führenden Leitungen zur Versorgung von Räumen eines Gebäudes (15) mit Wärme und mit Fluide führenden Leitungen zur Versorgung der Räume des Gebäudes (15) mit Kälte,
**dadurch gekennzeichnet,**
**dass** eine Umschalteinrichtung (20) vorgesehen ist,
**dass** die Umschalteinrichtung (20) mit der oder den Quellen für Heizenergie (10, 11, 12) und mit der oder den Quellen für Kälteenergie (13, 14) über Fluide führende Leitungen und außerdem mit den Leitungen zur Versorgung der Räume des Gebäudes (15) verbunden ist, und
**dass** die Umschalteinrichtung (20) so aufgebaut ist, dass sie die Wärme und die Kälte mittels der Fluide aus den Leitungen von den Quellen für Heizenergie (10, 11, 12) und den Quellen für Kälteenergie (13, 14) steuerbar in die Leitungen zur Versorgung der Räume des Gebäudes (15) einspeist.

2. Anordnung nach Anspruch 1,
**dadurch gekennzeichnet,**
**dass** die Umschalteinrichtung (20) mehrere 2/3-Wege-Ventile (V3, V4, V5) aufweist, die umschaltbar eine hydraulische Führung der Fluidströme unterschiedlicher Temperatur vornehmen.

3. Anordnung nach Anspruch 1,
**dadurch gekennzeichnet,**
**dass** die Umschalteinrichtung (20) ein oder mehrere, insbesondere zwei 5-Wege-Ventile (V6) aufweist, welche umschaltbar eine hydraulische Führung der Fluidströme unterschiedlicher Temperatur vornehmen.

4. Anordnung nach einem der vorstehenden Ansprüche,
**dadurch gekennzeichnet,**
**dass** die Quellen für Kälteenergie (13, 14) eine Kältemaschine (13) und eine der Kältemaschine (13) zugeordnete Rückkühleinrichtung (14) aufweisen, und
**dass** die Rückkühleinrichtung (14) auch bei Nichtbetrieb der Kältemaschine (13) über die Umschalteinrichtung (20) zur Versorgung der Räume des Gebäudes (15) heranziehbar ist.
